# EUROPÄISCHE PATENTSCHRIFT

(11) **EP 3 930 445 B1**
(45) Veröffentlichungstag und Bekanntmachung des Hinweises auf die Patenterteilung: **28.12.2022**
(21) Anmeldenummer: 20701421.8
(22) Anmeldetag: 16.01.2020
(51) Int. Cl.: A01G 9/04, A01G 9/02

(54) **PLFANZENTOPF-UNTERSETZER**
PLANT POT SAUCER
SOUCOUPE POUR POT DE FLEUR

(30) Priorität: 25.02.2019 DE 202019101074 U
(43) Veröffentlichungstag der Anmeldung: 05.01.2022
(73) Patentinhaber: Leikermoser, Dieter, 83123 Amerang (DE); Reiser, Stephan, 83123 Amerang (DE)
(72) Erfinder: Leikermoser, Dieter, 83123 Amerang (DE); Reiser, Stephan, 83123 Amerang (DE)
(74) Vertreter: Flach Bauer & Partner Patentanwälte mbB
(86) Internationale Anmeldenummer: PCT/EP2020/051060
(87) Internationale Veröffentlichungsnummer: WO 2020/173615

(56) Entgegenhaltungen:
- CN-A- 103 099 476
- CN-U- 202 536 868
- KR-A- 20080 050 363
- KR-U- 20160 002 474
- KR-Y1- 200 437 190
- US-A1- 2011 232 184
- US-A1- 2012 110 903
- US-A1- 2017 359 964

## Beschreibung

Die Erfindung betrifft einen Pflanzentopf-Untersetzer nach dem Oberbegriff des Anspruchs 1.

Es sind bereits die unterschiedlichsten Pflanzentopf-Untersetzer bekannt geworden, die teils für den Außenbereich und teils für den Innenbereich vorgesehen sind. Manche dieser Pflanzentopf-Untersetzer können sowohl im Außenals auch im Innenbereich eingesetzt werden.

Bekannt geworden sind beispielsweise quadratische oder scheibenförmige Topf-Untersetzer. Diese können eine geschlossene quadratische oder kreisförmige Trägerplatte umfassen. Bekannt geworden sind auch rahmenförmige Untersetzer, die mehrere nebeneinander setzende Latten umfassen, die durch einen schmalen Spalt voneinander getrennt sind. Derartige Untersetzer weisen üblicherweise vier an der Unterseite um 90° versetzt liegend jeweils eine Rolle auf, um einen derartigen Untersetzer vor allem auch im Indoor-Bereich leicht verschieben zu können.

Für den Außenbereich werden häufig so genannte "Topf-Krallen" verwendet. So können beispielsweise bei einem Terrakotta-Topf vier derartiger Krallen entsprechend aufgestellt und der Topf darauf abgesetzt werden, sodass der Topf geringfügig über der eigentlichen Boden-, Weg- oder Gartenfläche steht.

Ein gattungsbildender Pflanzentopf-Untersetzer ist beispielsweise aus der KR 2016-0002474 U bekannt geworden. Er umfasst einen relativ schmalen Ring als Standfläche für Pflanzentöpfe, welcher eine verhältnismäßig groß dimensionierte zentrale Öffnung umgibt. An diesem umlaufenden Ring sind in Umfangsrichtung versetzt liegend drei Füße vorgesehen, die in Umfangsrichtung von ihrer unteren Standfläche bis zu dem ringförmigen Trägerelement eine gleiche Dicke aufweisen, wohingegen die Dicke in Radialrichtung von unten nach oben bis zu einem ersten maximalen Erstreckungsabschnitt zunimmt, der breiter ist als der eigentliche Träger-Ring, um danach wieder in ihrer radialen Längserstreckung auf das Breitenmaß des umlaufenden Ringträgerelementes abzunehmen.

Nur der Vollständigkeit halber wird beispielsweise auf die US 2011/0232184 A1 verwiesen, aus der ebenfalls ein Pflanzentopfträger als bekannt zu entnehmen ist, der in seiner eigentlichen scheibenförmigen Trägerplatte nur eine kleine zentrale Öffnung aufweist, zu welcher von außen nach innen radial verlaufend vertiefte Drainagekanäle ausgebildet sind. Die Füße sind leicht nach außen ausgestellt und weisen von oben nach unten verlaufend in Umfangsrichtung die gleiche Dicke auf, um im unteren Standbereich in eine größere radiale Erstreckung überzugehen. Dort ist jeweils mittig eine nach unten weisende Ausnehmung vorgesehen, die es ermöglicht, dass ein derartiger Pflanzentopfträger mit seinen Füßen auf dem umlaufenden Rand eines nächsten darunter befindlichen weiteren Pflanzentopfträgers aufgesetzt werden kann.

Aus der US 2017/0359964 A1 ist ein Pflanzentopfträger mit einem hohen umlaufenden Rand zu entnehmen, der ein scheibenförmiges Tragelement in Umfangsrichtung verlaufend umgibt. Vom Innenraum kommend ist durch den umlaufenden Rand hindurch ein rinnenförmiger Auslass vorgesehen, worüber überschüssiges Wasser ablaufen kann.

Aufgabe der vorliegenden Erfindung ist es von daher, ausgehend vom Stand der Technik, einen verbesserten Pflanzentopf-Untersetzer zu schaffen.

Die Aufgabe der Erfindung ist entsprechend den im Anspruch 1 angegebenen Merkmalen gelöst. Vorteilhafte Ausgestaltungen der Erfindung sind in den Unteransprüchen angegeben.

Es muss als durchaus überraschend bezeichnet werden, dass der erfindungsgemäße Pflanzentopf-Untersetzer zahlreiche und dabei nicht unerhebliche Vorteile gegenüber der Vielzahl der auf dem Markt erhältlichen Pflanzentopf-Untersetzer aufweist.

Der erfindungsgemäße Pflanzentopf-Untersetzer ist bevorzugt (abgesehen lediglich von auf der Unterseite der Füße aufsetzbaren Auflagepads) einteilig oder einstückig ausgebildet, also bevorzugt mit den an der Unterseite des Pflanzentopf-Untersetzers vorgesehenen Füßen.

Der erfindungsgemäße Pflanzentopf-Untersetzer zeichnet sich dadurch aus, dass er platten- oder podestartig ausgebildet ist, beispielsweise mit einem plattenförmigen Pflanzentopf-Träger, an dessen Unterseite in Umfangsrichtung versetzt liegend vorzugsweise drei Standbeine vorgesehen oder ausgebildet sind.

Der erfindungsgemäße vorzugsweise podest- oder plattenförmig gestaltete Pflanzentopf-Untersetzer weist also in seinem Bereich oberhalb seiner Standfüße den eigentlichen Pflanzentopf-Träger mit einem auf dessen Oberseite vorgesehenen Pflanzentopf-Stellbereich auf.

Die Unterseite des Pflanzentopf-Trägers umfasst wie ausgeführt bevorzugt als integralen Bestandteil zumindest und dabei bevorzugt drei in Umfangsrichtung um eine Zentralachse versetzt zueinander angeordnete Standbeine, insbesondere bei einer lochscheibenförmigen Ausgestaltung mit runder oder allgemein kreisförmiger Außenkontur. Dadurch ist stets eine kippfreie Aufstellung möglich.

Dabei ist der erfindungsgemäße Pflanzentopf-Untersetzer so ausgebildet, dass bei den mindestens drei Standbeinen die jeweils zwei in entgegengesetzte Umfangsrichtung weisenden Seitenwandbereiche eine konkave Oberfläche aufweisen, die von der unteren Standfläche der Füße ausgehend über einen konkaven Bogenabschnitt in die mehr oder weniger plane Unterseite des plattenförmigen Pflanzentopf-Trägers übergehen, bevorzugt tangential unter Vermeidung einer Übergangskante. Dadurch ergibt sich eine besonders klare Struktur.

Ferner zeichnet sich der erfindungsgemäße Pflanzentopf-Untersetzer dadurch aus, dass die radiale Längserstreckung der Standbeine ein Maß aufweist, welches der radialen Breite des durch den zentralen Öffnungsbereich (15) in der Oberseite des Pflanzentopf-Trägers gebildeten ringförmigen Tragabschnittes entspricht oder um weniger als +- 20% oder um weniger als +- 10% davon abweicht.

Insbesondere dann, wenn die gesamte Oberfläche sowohl auf der Oberseite wie auch auf der Unterseite des Pflanzentopf-Untersetzers glatt, das heißt bevorzugt vorsprungs-, rippen- oder verstrebungsfrei ausgebildet ist, ergibt sich eine vergleichsweise "klare Kontur".

Dies eröffnet bei Verwendung des Pflanzentopf-Untersetzers Vorteile, nicht nur im Innenbereich, sondern auch im Außenbereich. Wird ein Pflanzentopf-Untersetzer im Garten aufgestellt, so ergibt sich durch diese klare Kontur bzw. Konturführung ein vergleichsweise groß dimensionierter "Freiraum" unterhalb der eigentlichen Pflanzentopf-Stellfläche und zwischen den in Umfangsrichtung versetzt liegenden Standbeinen, sodass dieser Bereich für Tiere, Kleinsttiere bzw. Ungeziefer als Nistplatz wenig geeignet erscheint. Die Oberfläche ist von daher vergleichsweise glatt oder nur mit geringer Rauigkeit ausgebildet. Dies lässt sich günstig dadurch erzeugen, indem der erfindungsgemäße Pflanzentopf-Untersetzer aus entsprechend geeignetem Material gefertigt ist, bevorzugt aus geeignetem Kunststoff- bzw. ökologischen Material. Genauso ist aber auch die Verwendung eines Recyclingmaterials möglich und/oder die Verwendung eines Materials, welches einen sogenannten Lotus-Blüten-Effekt aufweist. Letztendlich ist aber auch eine Fertigung unter Verwendung von Tonmaterial möglich. Beschränkungen auf andere Materialauswahlen oder Materialmischungen bestehen grundsätzlich nicht.

Mit anderen Worten ist der erfindungsgemäße Pflanzentopf-Untersetzer von seiner Kontur und Gestaltung her mehr oder weniger Kanten- und insbesondere hinterschneidungsfrei gebildet.

Auf der Ober- und/oder Unterseite kann umlaufend ein kleiner die eigene Standfläche möglichst nur gering überragender Rand ausgebildet sein, der eine Höhe von beispielsweise weniger als 1 mm oder weniger als 1,5 mm oder 2 mm aufweist.

Bevorzugt ist der Pflanzentopf-Untersetzer in Draufsicht scheiben- oder kreisförmig gestaltet. Er ist insbesondere um seine Zentralachse herum mittig mit einer Durchtrittsöffnung versehen. Es können grundsätzlich mehrere voneinander getrennte Durchtrittsöffnungen ausgebildet sein, wobei allerdings eine eher groß dimensionierte Durchtrittsöffnung bevorzugt ist, wodurch bei aufgestellten Töpfen durch die bevorzugt im mittleren Bereich durchgesehene Durchtrittsöffnung auf der Unterseite eines aufgestellten Pflanzentopfes austretendes Wasser problemlos nach unten hin ablaufen oder abtropfen kann (wobei insbesondere bei Indoor-Gebrauch noch eine Unter- oder Auffangschale unter dem eigentlichen Pflanzentopf-Untersetzer aufgestellt werden kann bzw. geschlossene Töpfe in Verwendung sind).

Der Öffnungsbereich, vorzugsweise im mittleren Bereich des platten- und/oder podestartigen Pflanzentopf-Untersetzers, weist eine Flächengröße auf, die bezogen auf die gesamte Stellfläche des Pflanzentopf-Trägers vorzugsweise zumindest 10% der Stellfläche aufweist, vorzugsweise mehr als 15%, 17,5%, 20%, 22,5%, 25%, 27,5%, 30%, 32,5%, 35%, 37,5%, 40%, 42,5%, 45%, 47,5%, 50%, 52,5%, 55%, 57,5%, 60%, oder zumindest 65% der Stellfläche.

Bevorzugt ist die Fläche dieser Öffnung aber andererseits auch kleiner als 75%, insbesondere kleiner als 72,5%, 70%, 67,5%, 65%, 62,5%, 60%, 57,5%, 55%, 52,5%, 50%, 47,5%, 45%, 42,5%, 40%, 37,5%, 35%, 32,5%, 30%, 27,5%, 25%, 22,5%, 20%, 17,5%, 15%, 12,5% oder insbesondere kleiner als 10% der Stellfläche.

Der Pflanzentopf-Untersetzer kann in unterschiedlichen Größen hergestellt sein.

Bevorzugt weist also der erfindungsgemäße Pflanzentopf-Untersetzer eine zentrale Öffnung auf, deren relative flächenmäßige Größe bezogen auf die gesamte durch den Außenumfang des Pflanzentopf-Trägers umspannte Stellfläche bei insgesamt größer dimensionierten Pflanzentopf-Untersetzern bevorzugt größer ist verglichen mit dem gegenüber kleiner dimensionierten Pflanzentopf-Untersetzern. Erfindungsgemäß sind dabei die Füße so ausgebildet, dass sie eine radiale Länge aufweisen, die der Breite des umlaufenden Trägerringes entspricht, der zwischen der Zentralöffnung in dem Pflanzentopf-Träger und dessen Außenbegrenzung gebildet ist. Dieser scheibenförmige Ring kann bei unterschiedlichen Größen der Pflanzentopf-Untersetzer stets mit gleicher radialer Breite ausgebildet sein, mit der Folge, dass dann trotz unterschiedlicher Größen der Pflanzentopf-Untersetzer die radiale Länge der ausgebildeten Füße immer gleich ist. Dadurch können auf der Unterseite dieser Füße beispielsweise insbesondere für den Indoor-Bereich vorgesehene Auflagepads, Auflage- oder Schutzkappen aufgesetzt bzw. aufgeklebt werden, die aufgrund der gleichen Dimensionierung der Auflageflächen der Standbeine für die unterschiedlichsten Untersetzer-Größen verwendet werden können.

Der erfindungsgemäße Pflanzentopf-Untersetzer kann aber auch in einer abgewandelten Ausführungsform in Draufsicht eine n-polygonale Struktur aufweisen, wobei n eine natürliche Zahl größer als 2 ist, also beispielsweise dreieckig, viereckig, fünfeckig, sechseckig etc. ausgebildet sein. Bevorzugt wird dabei eine Form gewählt, bei der die einzelnen Seitenlängen stets gleich sind (regelmäßiges n-Polygon), so dass sich entsprechend der Anzahl der Ecken eine entsprechende Drehsymmetrie um eine Zentralachse herum ergibt. In all diesen Fällen sollen die Füße aber gleichermaßen von unten, d.h. von deren Standfläche zur Unterseite der eigentlichen Tragplatte des PflanzentopfTrägers mit konkaven gegenüberliegenden Seitenwänden ausgestattet sein, so dass die Füße von unten nach oben zur eigentlichen Standfläche hin in ihrer Breite zwischen den beiden konkaven Seitenflächen zunehmen. Der Radius dieser konkaven Form kann in weiten Bereichen beliebig gewählt werden. An der Unterseite des Pflanzentopf-Trägers wird ein kantenfreier tangentialer Übergang bevorzugt.

In einer weiteren Ausgestaltung sind die eigentlichen Füße hohl ausgebildet, weisen also neben ihrer Standfläche bevorzugt nur die konkav gebildeten Seitenwandabschnitte auf. Durch diese in Stirnseitenansicht einer Trapezform angenäherten Fußquerschnittsform (allerdings bevorzugt nicht mit geraden Seitenwänden, sondern wie ausgeführt mit konkave gestalteten Seitenwänden) ergibt sich auch bei geringer Materialdicke eine verbesserte Standfestigkeit, vor allem auch Scherungssteifigkeit.

Darüber hinaus kann diese Hohlform der Füße benutzt werden, um darin beispielsweise einen Halter für eine Beleuchtung unterzubringen und/oder einen Sensor, der auch zur Erhöhung der Einbruchssicherheit oder des Personenschutzes (z.B. für kranke oder alte Menschen) dienen kann. Dieser Sensor kann beispielsweise Signale ins Gebäude senden und signalisieren, dass sich Personen in der Nähe des Pflanzentopf-Untersetzers aufhalten. Auch im Falle einer Beleuchtung kann hier in einem entsprechenden im Hohlfuß untergebrachten Einsatz ein Bewegungsmelder mit integriert sein. Dieser Einsatz ist bevorzugt durch Formschlussverbindung in dem Hohlfuß ein- bzw. unterzubringen, gegebenenfalls alternativ oder ergänzend dazu kraftschlüssig. Schließlich könnte auch ein Dämmerungssensor vorgesehen sein, der dann die Beleuchtung automatisch auslösen kann, wenn ein bestimmter Helligkeitswert unterschritten wird.

Zusammengefasst kann also festgehalten werden, dass sich der erfindungsgemäße Pflanzentopf-Untersetzer unter anderem durch folgende Vorteile und Eigenschaften auszeichnet, nämlich:
- Da bevorzugt nur drei Standbeine vorgesehen sind, weist er zumindest in den meisten Fällen, wenn nicht sogar immer, einen sicheren und festen Stand auf. Er ist zudem aufgrund der klaren Konturgebung leicht zu reinigen;
- sofern der Pflanzentopf-Träger mehr als drei Füße aufweist, ist bevorzugt vorgesehen, dass jeder weitere Fuß oder zumindest ein weiterer Fuß mit einer Höhenjustierung versehen ist, beispielsweise nach Art eines ein- und ausschraubbaren und somit in der Höhe veränderbaren Fußes;
- durch die klare Formgebung im Wesentlichen ohne Stege, Rippen oder sonstige Hinterschneidungen ist auch die Unterseite des Pflanzentopf-Untersetzers vergleichsweise hell (da Licht hier eindringen kann), was letztlich einen Ungezieferschutz bewirkt;
- durch das Fehlen von Hinterschneidungen und Rippen wird ein Ungezieferschutz auch insoweit ermöglicht, da er kaum Möglichkeiten zum Nisten bietet;
- ferner werden durch die Formgebung auch Ablagerungen auf dem Untergrund vermieden;
- durch die klare Konturgebung werden Verunreinigungen unter einem aufgesetzten Blumentopf vermieden;
- es bildet sich keine Staunässe, kein Schimmel und keine Fäulnis aufgrund der licht- und luftdurchfluteten Gestaltung des Pflanzentopf-Untersetzers;
- auch im Indoor-Bereich wird durch die Gestaltung des Pflanzentopf-Untersetzers beispielsweise ein Abstand zur Fußbodenheizung gewährleistet, sodass keine Stauwärme unter dem Pflanzentopf-Untersetzer entstehen kann; und
- durch den Abstand zur Bodenfläche wird auch im Außenbereich im Winter eine Kältebrücke zum Boden vermieden.

Die Erfindung wird nachfolgend anhand von Ausführungsbeispielen näher erläutert. Dabei zeigen im Einzelnen
- Figur 1:: eine schräge Draufsicht auf den erfindungsgemäßen Pflanzentopf-Untersetzer;
- Figur 2:: eine schräge Unterseitenansicht auf die Figur 1;
- Figur 3:: eine axiale Draufsicht auf den erfindungsgemäßen Pflanzentopf-Untersetzer;
- Figur 4:: eine zentrale Unteransicht des erfindungsgemäßen Pflanzentopf-Untersetzers;
- Figur 5a bis 5d:: vier Seitenansichten parallel zur Oberfläche des Pflanzentopf-Untersetzers und hier jeweils um 90° versetzt zueinander liegende senkrechte Seitenansichten;
- Figur 6a und 6b:: zwei schräge Draufsichten auf den anhand von Figur 1 gezeigten erfindungsgemäßen Pflanzentopf-Untersetzers, wobei in Figur 6a an der Unterseite der Standbeine noch keine Kappen, das heißt Abschluss- oder Fußkappen aufgesteckt sind, wohingegen ei der Darstellung gemäß Figur 6b diese Kappen an der Unterseite der Beine angebracht sind;
- Figur 7a und 7b:: zwei entsprechende schräge Unterseitenansichten des anhand der Figuren 1 bis 5 gezeigten Ausführungsbeispiels, wobei in Figur 7a die Fußkappen in noch nicht und in Figur 7b im aufgesteckten Zustand gezeigt sind;
- Figur 8:: eine zentrale Unterseitenansicht auf das erfindungsgemäße Ausführungsbeispiel mit aufgesetzten Fußkappen;
- Figur 9a bis 9d:: die entsprechenden vier um 90° versetzten Seitendarstellungen des erläuterten Ausführungsbeispiels mit aufgesetzten Fußkappen;
- Figur 10:: eine zur Figur 1 vergleichbare Darstellung eines anderen Ausführungsbeispiels eines größer dimensionierten Pflanzentopf-Untersetzers;
- Figur 11:: eine entsprechende schräge Unterseitenansicht auf das Ausführungsbeispiel nach Figur 10;
- Figur 12:: eine exakte Draufsicht auf den erfindungsgemäßen Pflanzentopf-Untersetzer nach den Figuren 10 und 11;
- Figur 13:: eine exakte Unterseitenansicht des erfindungsgemäßen Pflanzentopf-Untersetzers;
- Figuren 14a bis 14d:: vier jeweils um 90° versetzt zueinander liegende Seitenansichten des anhand des Ausführungsbeispiels nach den Figuren 10 bis 13 gezeigten zweiten Ausführungsbeispiels eines erfindungsgemäßen Pflanzentopf-Untersetzers;
- Figur 15a:: eine zu Figur 10 vergleichbare Darstellung mit auf der Unterseite der Standbeine aufgesetzten Abschlusskappen; und
- Figur 15b:: eine zu Figur 11 vergleichbare Darstellung mit aufgesetzten Kappen;
- Figur 16a bis 16c:: ein zu Figur 1 und 2 abgewandeltes Ausführungsbeispiel eines Pflanzentopf-Untersetzers mit 3 Füßen, die jedoch nicht geschlossen oder als Vollkörper ausgebildet sind sondern einen Hohlraum aufweisen;
- Figur 17a bis 17c:: eine Draufsicht, eine Seitenansicht und eine Stirnseitenansicht einer elektrischen und/oder elektronischen Einrichtung zur Realisierung verschiedener technischer Maßnahmen;
- Figur 17d:: eine Draufsicht auf einen erfindungsgemäßen Pflanzentopf-Träger, in welchem eine anhand der Figuren 17a bis 17c gezeigten Beleuchtungseinrichtung integriert ist;
- Figur 18a bis 18c:: drei unterschiedliche Ansichten eines vier Füße aufweisenden scheiben- oder ringförmigen Pflanzentopf-Trägers;
- Figur 19a bis 19c:: drei Darstellungen eines nochmal abgewandelten Pflanzentopf-Trägers der gegenüber dem Ausführungsbeispiel nach Figur 18a bis 18c fünf in Umfangsrichtung um die Zentralachse versetzt liegende Füße vorzugsweise mit einem integrierten Hohlraum aufweist; und
- Figur 20a bis 20d:: vier unterschiedliche Darstellungen eines quadratischen Pflanzentopf-Trägers mit quadratischer Öffnung im Zentralbereich um die Zentralachse herum, der bevorzugt drei Füße vergleichbar zu den vorausgegangenen Ausführungsbeispielen umfasst, sowie einen höhenverstellbaren Fuß; und
- Figur 20e:: eine Vertikalschnittdarstellung durch den erfindungsgemäßen Pflanzentopf-Träger gemäß den Figuren 20a bis 20d mit einem Höhenverstellbaren Fuß.

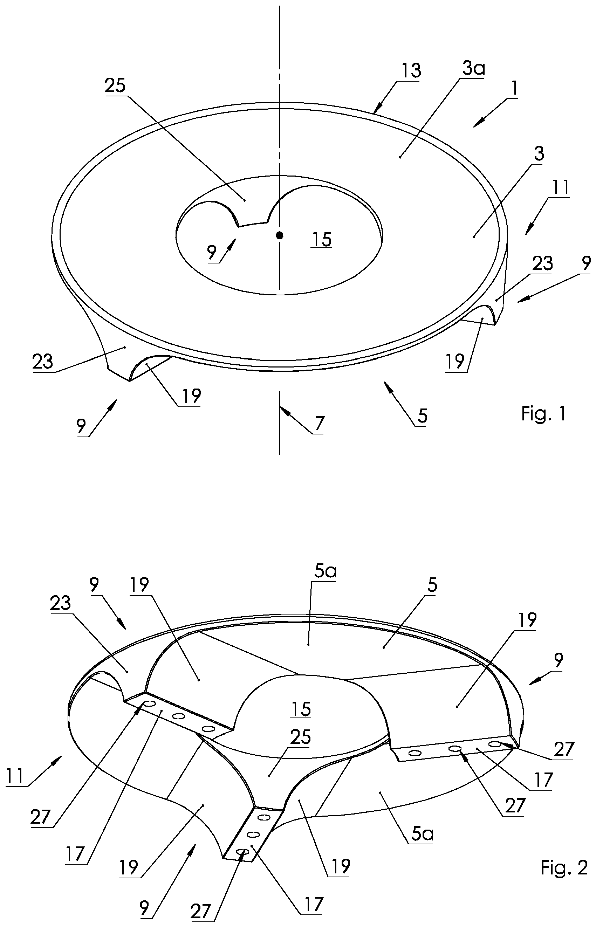

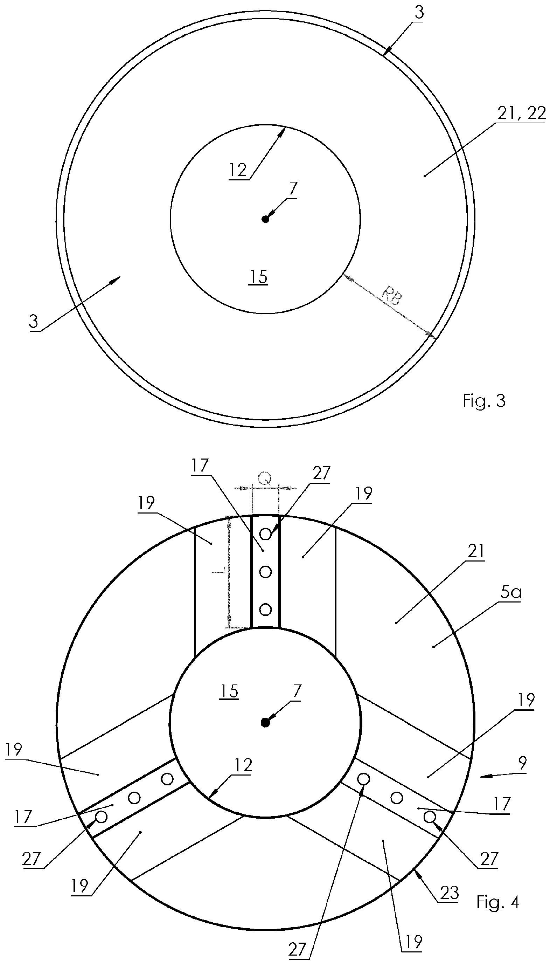

Nachfolgend wird anhand der Figuren 1 bis 5d auf ein erstes Ausführungsbeispiel eines erfindungsgemäßen Pflanzentopf-Untersetzers bezuggenommen.

Der Pflanzentopf-Untersetzer umfasst einen PflanzentopfTräger 1 mit einer Trägerplatte 2 mit einer Oberseite 3 und einer Unterseite 5, wobei auf der Unterseite 5 um eine abstrakte Zentralachse 7 herum in Umfangsrichtung versetzt zueinander angeordnet drei Standbeine 9 vorgesehen und/oder ausgebildet sind.

Bevorzugt sind die Standbeine um 120° um die Zentralachse 7 versetzt zueinander angeordnet. Durch die Ausbildung dreier Standbeine ergibt sich immer eine standsichere, das heißt kippfreie Aufstellung des Pflanzentopf-Trägers nicht nur im Innenraumbereich, sondern vor allem auch im Außenraumbereich.

Der Pflanzentopf-Träger 1 ist zumindest näherungsweise platten- oder podestförmig gestaltet. Die Oberseite 3 des Pflanzentopf-Trägers ist im gezeigten Ausführungsbeispiel scheiben- oder kreisförmig gestaltet und weist gegebenenfalls am Außenumfang 11 einen Rand 13 auf, der sich bevorzugt nur geringfügig über die Fläche der Oberseite 3 nach oben hin erhebt, beispielsweise nur um weniger als 0,5 mm oder 1 mm, insbesondere weniger auch als 1,5 mm oder 2 mm, obgleich der Rand auch höher ausgebildet sein kann.

Bevorzugt rotationssymmetrisch im inneren Bereich des Pflanzentopf-Trägers sind Öffnungsbereiche 15 ausgebildet, der bevorzugt rand- oder rahmenlos gestaltet ist, der zumindest mit keinem nach oben über die Standfläche überstehenden Rahmen versehen ist.

Wie aus der schrägen Unteransicht insbesondere auch aus Figur 2 zu ersehen ist, sind die Standbeine 9 so gestaltet, dass sie eine beispielsweise zumindest näherungsweise rechteckförmige Stand- oder Fußfläche 17 aufweisen, in der der Pflanzentopf-Träger auf dem Boden beispielsweise im Gartenbereich oder auch im Indoor-Bereich aufgestellt werden kann.

Diese rechteckförmige Stand- oder Fußfläche 17, weist eine größere Längserstreckung L auf, verglichen mit der Quererstreckung Q. Die Längserstreckung L verläuft dabei radial von der Zentralachse 7 ausgehend.

Die so gebildeten Füße oder Standbeine 9 weisen dabei zwei gegensinnig ausgerichtete Fußseitenflächen 19 auf, wobei die beiden Fußseitenflächen 19 in Umfangsrichtung gegensinnig zueinander ausgerichtet sind. Diese Fußseitenflächen 19 beginnen bevorzugt an der unteren Stand- oder Fußfläche 17, können dort also in einem Winkelbereich von beispielsweise 90° und weniger, gegebenenfalls in einem Winkelbereich von 90° bis bevorzugt von mehr als 70°, insbesondere mehr als 75°, 80°, 85° oder 87,5° von der Standoder Fußfläche weg leicht divergierend beginnend verlaufen und dabei mehr oder weniger tangential in einem standbeinfreien Tragabschnitt 5a auf der Unterseite 5 des Pflanzentopf-Trägers 1 enden. Mit anderen Worten nimmt die Breitenerstreckung in Umfangsrichtung des so gebildeten Standbeins von der Stand- oder Fußfläche 17 aus nach oben hin in Richtung des Pflanzentopf-Stellbereiches 3a zu.

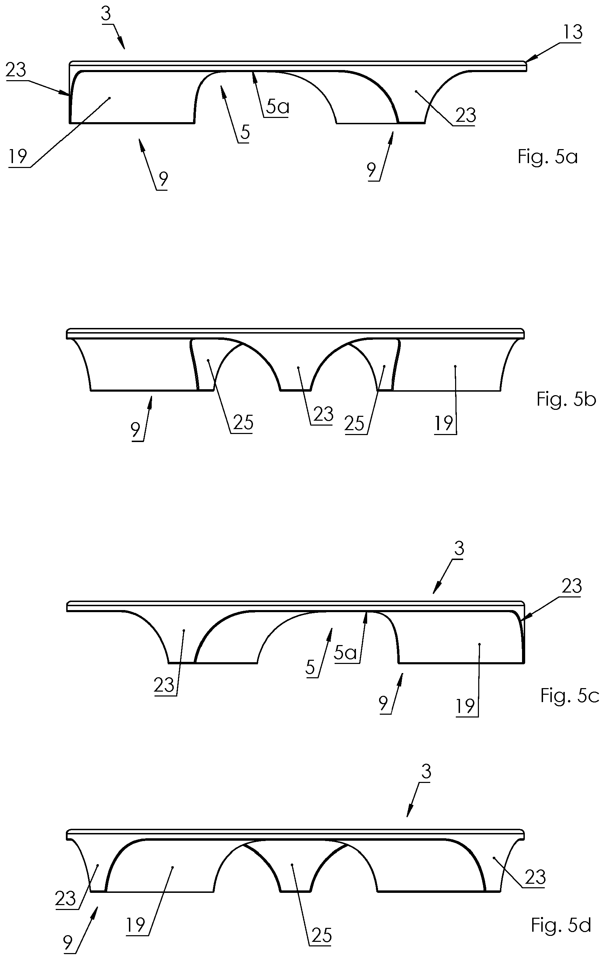

Berücksichtigt man dabei ferner, dass bevorzugt nicht nur die Oberseite 3 sondern vor allem auch die Unterseite 5 des so gebildeten Pflanzentopf-Trägers 1 und damit dessen Trägerplatte 2 vorsprungs-, rippen-, steg- und/oder verstrebungsfrei gestaltet ist, also vorzugsweise mit einer vergleichsweise glatten oder nur mit einer geringen Rauigkeit versehenen Oberfläche, so ergibt sich dadurch eine äußerst "klare Kontur". Auch bei seitlicher Betrachtung entsprechend den Figuren 5a bis 5d ist zu sehen, dass der gesamte Bereich unterhalb des eigentlichen plattenförmigen Trägerabschnittes des Pflanzentopf-Trägers einen verhältnismäßig groß dimensionierten Freiraum aufweist, der aufgrund mangelnder Hinterschneidungen auch für Tier, Kleinsttier und Ungeziefer als Nist- und Brutplatz weniger geeignet erscheint.

Mit anderen Worten ergibt sich dabei ein klar strukturierter lichtdurchfluteter Raum, der auch aufgrund der spezifischen Ausbildung des erfindungsgemäßen PflanzentopfTrägers auch wenig dazu geeignet erscheint Feuchtigkeit zu halten, Schimmel zu bilden etc. Gerade die zuletzt genannten Vorteile sind auch bei der Indoor-Anwendung von großer Bedeutung.

Die Länge L der so gebildeten Standbeine 9 entspricht bevorzugt der radialen Breite RB des scheibenförmigen Ringabschnittes 21, der durch die Formgebung der umlaufenden Außenrandbegrenzung, also durch den Außenumfang 11 und die Durchmessergröße des Öffnungsbereichs 15 im mittleren oder Zentralbereich der eigentlichen Oberseite 3, also des eigentlichen Pflanzentopf-Stellbereichs 3a gebildet ist. Durch die Öffnung 15 in dem Pflanzentopf-Träger 1 wird also eine Innenrandbegrenzung 12 für den eigentlichen ringförmigen Tragabschnitt 22 des Pflanzentopf-Trägers 1 gebildet, der dem Ringabschnitt 21 entspricht.

Diese Öffnung 15 hat wiederum den Vorteil, dass die Füße 9 hier eine maximale Kraft aufnehmen können, weil sie von ihrer Längserstreckung L maximal ausgebildeten sind, ohne nach außen über den Außenumfang oder auch nach innen in den Öffnungsbereich 15 hinein überzustehen.

Die Fußaußenflächen 23 der so gebildeten Standbeine 9 können bevorzugt mehr oder weniger senkrecht zur Oberseite 3 ausgerichtet sein. Diese Fußaußenflächen 23 können aber auch leicht winklig zur Oberseite 3 oder zum eigentlichen untenliegenden Stand- oder Fußflächenbereich 17 ausgerichtet sein, das heißt leicht nach außen divergierend oder nach innen konvergierend, also von der Zentralachse 7 leicht weg oder auf diese leicht zu verlaufend, wobei die Winkelabweichung hier bevorzugt weniger als +- 10° zu einer senkrechten auf die Fläche der Oberseite 3, vorzugsweise weniger als +- 20° betragen soll.

Das gleiche gilt grundsätzlich auch für die radial nach innen weisende Fußinnenfläche 25 der Standbeine 9.

Obgleich die Größe des Öffnungsbereiches 15 in weiten Bereichen unterschiedlich gewählt sein kann, wird bevorzugt ein Bereich hierfür bevorzugt, der größer ist als zumindest 10% der gesamten Fläche der Oberseite 3, also desjenigen Pflanzentopf-Stellbereiches 3a, der ohne Berücksichtigung des Öffnungsbereiches 15 durch den umlaufenden Rand 13 der Oberseite 3, also durch den Außenumfang der Oberseite 3 begrenzt wird. Die Fläche des Öffnungsbereiches 15 kann dabei bevorzugt zumindest 15%, 20%, 25%, 30%, 35%, 40%, 45%, 50%, 55%, oder bevorzugt auch mehr als 60% der so definierten Gesamtfläche der Oberseite 3 betragen, also der durch die Außenumgrenzung 11 definierten Pflanzentopf-Stellbereiches 3a. Andererseits soll die Fläche des Öffnungsbereiches 15 bezogen auf diese durch den umlaufenden Rand 11 definierten Oberflächenbereich bevorzugt kleiner als 70%, insbesondere kleiner als 65%, 60%, 55%, 50%, 45%, 40%, 35%, 30%, 25%, 20%, bis insbesondere kleiner als 15% sein.

Es ist bereits angemerkt worden, dass der Pflanzentopf-Untersetzer unterschiedlich dimensioniert sein kann, was den Durchmesser betrifft, die Größe des mittleren Loches, der Länge, Breite und Höhe der Füße etc. Ergänzend soll hier angemerkt werden, dass die Höhe der Füße oder Standbeine 9 beispielsweise zwischen 15 mm und 80 mm variieren kann, vorzugsweise größer als 15 mm, 20 mm, 25 mm, 30 mm, 35 mm, 40 mm, 45 mm, 50 mm, 55 mm, 60 mm, 65 mm, 70 mm oder vorzugsweise größer als 75 mm und/oder insbesondere kleiner als 80 mm, insbesondere kleiner als 75 mm, 70mm, 65 mm, 60 mm, 55 mm, 50 mm, 45 mm, 40 mm, 35 mm, 30 mm, 25 mm oder vorzugsweise kleiner als 20 mm ist.

Der so gebildete Pflanzentopf-Träger kann aus allen geeigneten Materialien gefertigt sein, vorzugsweise aus ökologischen Kunststoff. Er kann grundsätzlich auch aus Keramik gefertigt sein. Auch alle anderen Materialien kommen grundsätzlich in Betracht. Einschränkungen auf bestimmte Materialien bestehen insoweit nicht.

Die Oberfläche des gesamten Pflanzentopf-Trägers soll bevorzugt nicht sehr rau sein. Sie soll zumindest eine solche geringe Rauigkeit aufweisen, dass die Rauigkeit von der Haptik her als angenehm empfunden wird. Besonders glatte Oberflächen weisen zudem den Vorteil auf, dass sich hier Schmutz noch schlechter ansammeln oder ansetzen kann. Vor allem auch glatte Untersetzerflächen erweisen sich für Kleinsttiere und Insekten als noch hinderlicher, um hier Nist- oder Brutplätze einzurichten.

Bezüglich der erwähnten Rauigkeit der Oberflächenbeschaffenheit des Pflanzentopf-Trägers kann zum besseren Verständnis noch angemerkt werden, dass bezugnehmend beispielsweise auf die Erodierstrukturen nach VDI 3400 (1975-06) die Oberflächen-Rauigkeitswerte bevorzugt bis zu 24, 27, 30, 33 oder insbesondere bis zu 36 aufweisen sollten. Mit anderen Worten sollten die Oberflächen so gestaltet sein, dass die Oberflächenwerte der Rauigkeit unterhalb zumindest eines der vorstehend genannten Werte liegen. Rauer sollten die Oberflächen nicht gestaltet sein. Insoweit können die bevorzugten Oberflächen auch als hochglanzpoliert, strichpoliert oder feinstgefräst bezeichnet werden, um die maximale Rauigkeit zu definieren. Nach der genormten Rauigkeitsangabe aus dem Maschinenbau wäre ein Rauigkeitswert Ra (DIN EN ISO 4287:2010-07) anzustreben, der kleiner als 2,0 ist.

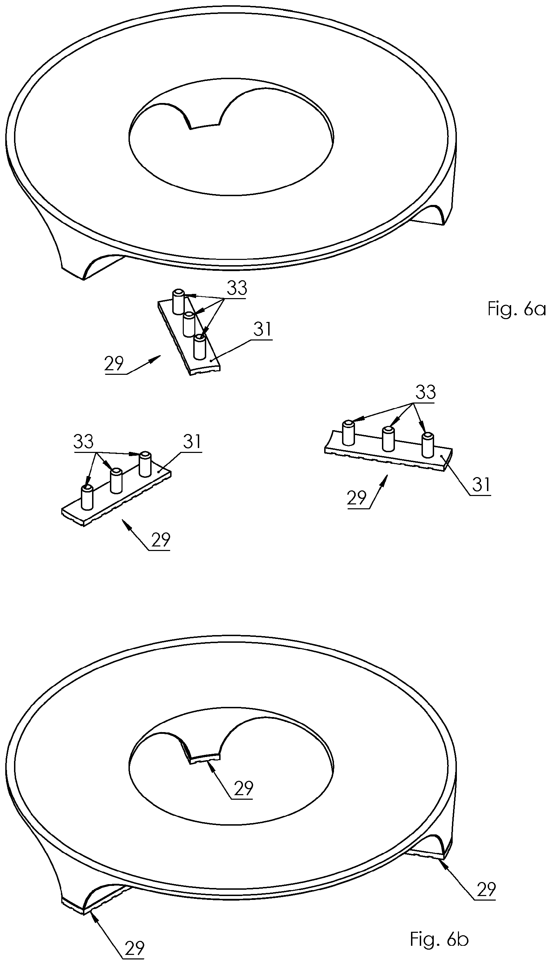

Bereits aus der schrägen Unteransicht gemäß Figur 2 wie aus der Unteransicht gemäß 4 ist zu sehen, dass die eigentliche Stand- oder Fußfläche 17 als einzige mit einer gewissen Hinterschneidung versehen sein kann, beispielsweise in Form von drei Lochausnehmungen 27. Diese Ausnehmungen 27 können aber auch völlig anders gestaltet sein. Sie dienen hier beispielsweise der Aufnahme und Verankerung von Fuß- oder Standkappen 29, die beispielsweise aus einem weicheren Kunststoff oder aus anderen Materialien gebildet sein können. Hier können Fußkappen- oder Fußflächenpads befestigt werden, wie diese beispielsweise anhand von Figur 6a noch in unbefestigter Lage gezeigt sind.

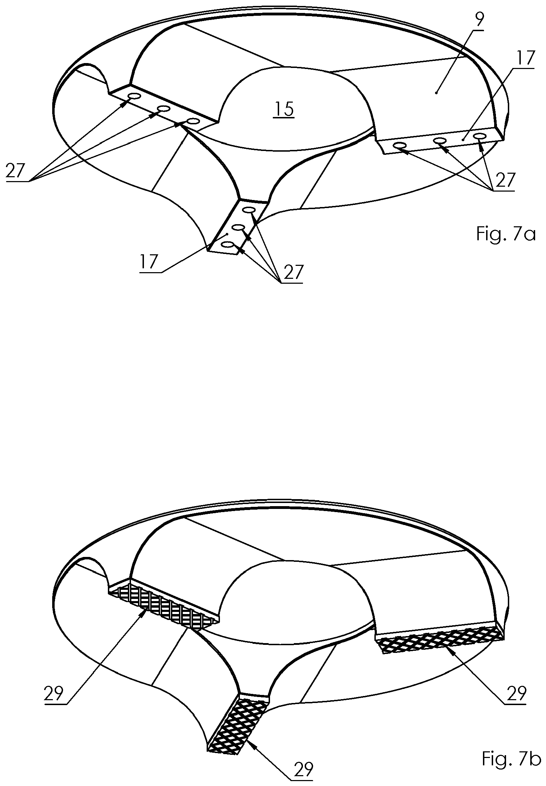

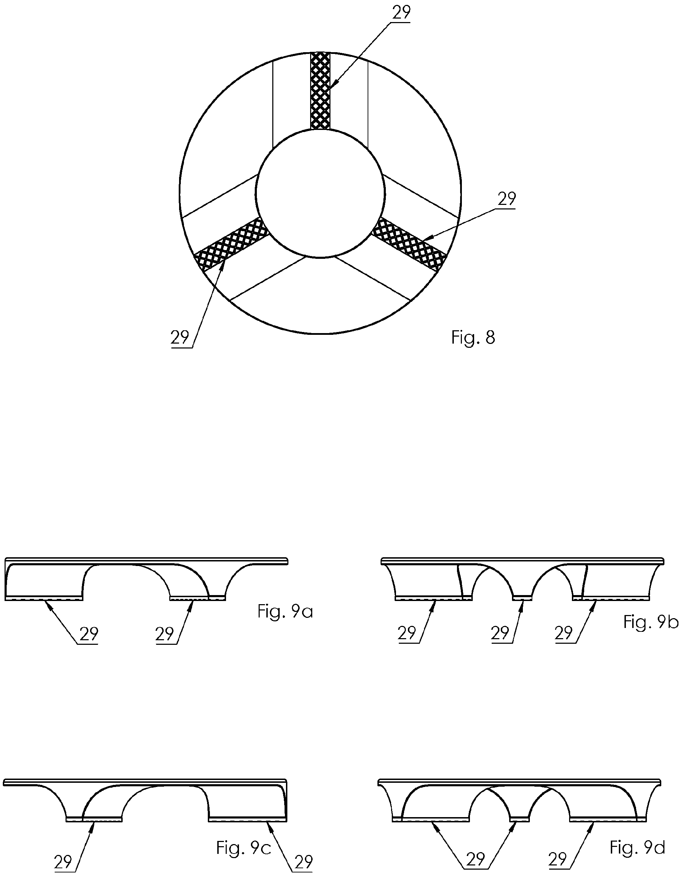

Diese aufsetzbaren Kappen 29 (Fig. 6a bis Fig. 9d) sind beispielsweise entsprechend der Stand- oder Fußfläche 17 mit vergleichbarer Längs- und Quererstreckungen gestaltet, weisen aber eine vergleichsweise dünne aber für den Einsatzzweck ausreichende Dicke auf, und können an ihrer Steckseite 31 mit entsprechenden Formvorsprüngen 33 versehen sein, die ausreichend lang bemessen sind und von ihrer Querschnittsform an die Lochausnehmungen 27 an der Unterseite der Standbeine neu angepasst sind (siehe Figur 7a). Beim Aufstecken entsteht ein ausreichender Reibschluss, wobei die Kappen 29 durch das Eigengewicht in den aufgesetzten Pflanzentopf ohnehin in ihrer Fixierlage gehalten werden.

Anhand der Figuren 6b und 7b bis Figur 9d sind in den entsprechenden Darstellungen die Fußkappen in Unter-, in Seitenansicht oder in Querblickrichtung dargestellt.

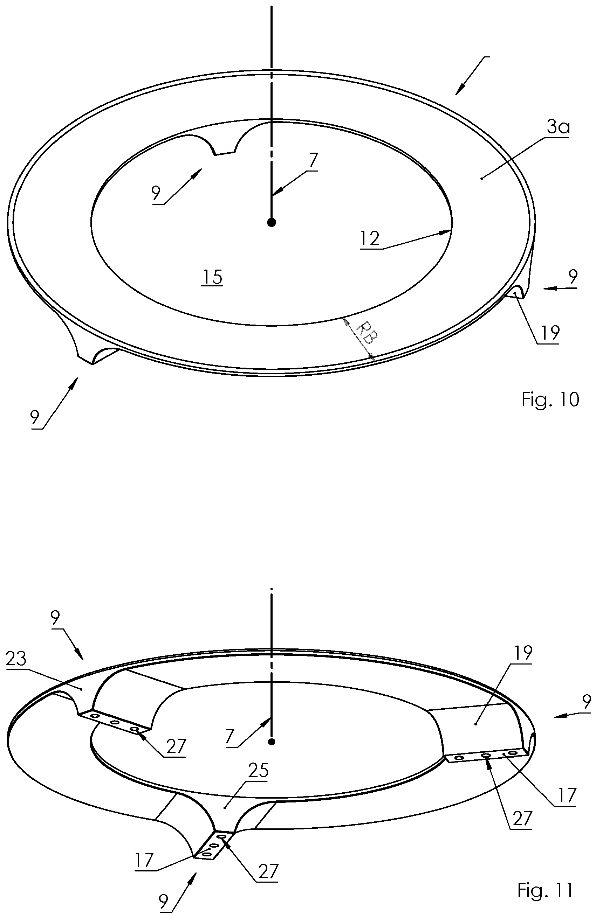

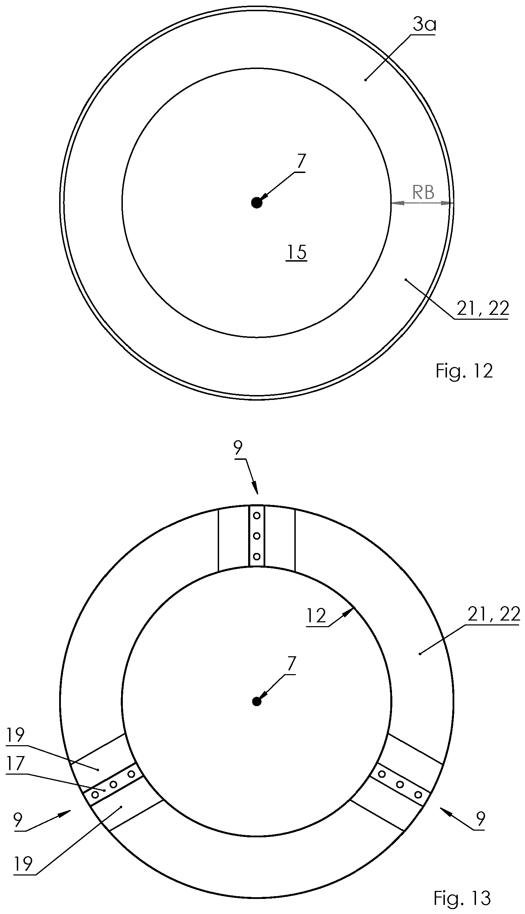

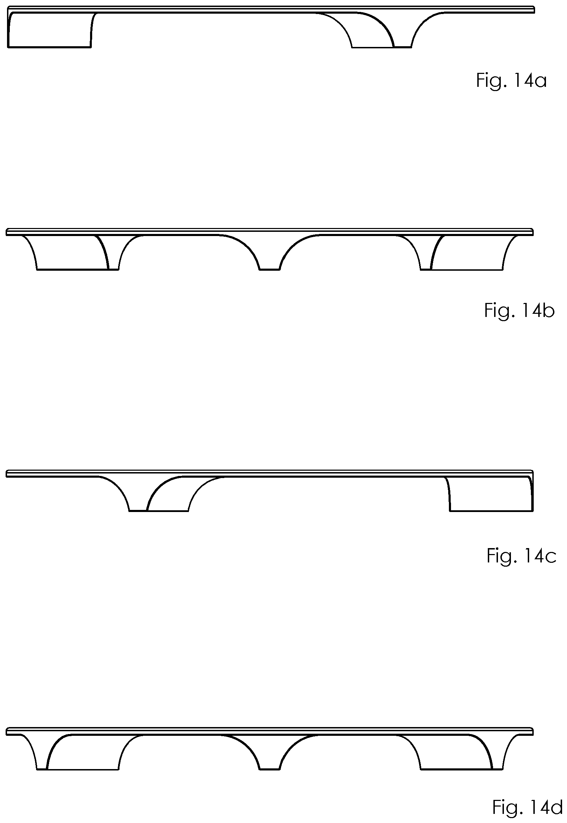

Nachfolgend wird ein zweites Ausführungsbeispiel anhand der Figuren 10 bis 14d erläutert.

Die Variante gemäß der Figur 10 bis 14d zeigt ein Beispiel für einen größer dimensionierten Pflanzentopf-Untersetzer, der also einen größeren Außendurchmesser aufweist als der Außendurchmesser in dem Ausführungsbeispiel nach den Figuren 1 bis 5b.

Ansonsten ist der Gesamtaufbau dieses zweiten Ausführungsbeispiels vergleichbar mit dem ersten Ausführungsbeispiel.

Allerdings ist die Lochöffnung, das heißt der Öffnungsbereich 15 größer dimensioniert, das heißt relativ größer dimensioniert bezogen auf die Gesamtfläche des Oberflächenbereiches der Trägerplatte 2 bzw. des PflanzentopfTrägers 1, der durch den Außenumfang 11 begrenzt ist. Die Öffnungsfläche des Öffnungsbereiches 15 kann beispielsweise bei diesem zweiten Ausführungsbeispiel um die 45% bis 50% betragen, wobei der bevorzugte Wert bei dem ersten Ausführungsbeispiel um die 20%, beispielsweise um die 17,5% bis 22,5% liegen kann, jeweils bezogen auf den zugehörigen Gesamtflächenbereich innerhalb des Pflanzentopf-Träger begrenzenden Außenumfangs.

Diese größere Fläche des Öffnungsbereiches 15 ist in dem zweiten Ausführungsbeispiel nach den Figuren 10 bis 14 d so gewählt worden, dass die Ringbreite RB des so gebildeten scheibenförmigen Ringbereiches 21 eine gleiche Breitenstreckung aufweist wie in dem ersten Ausführungsbeispiel. Dies wiederum hat zur Folge, dass die an der Unterseite 5 vorgesehenen Standbeine 9 eine gleiche radiale Längserstreckung L aufweisen wie in dem ersten Ausführungsbeispiel. Von daher können auch bei einem so ausgestalteten Ausführungsbeispiel mit anderer Größendimensionierung identische Fußkappen 29 verwendet werden, wie in dem ersten Ausführungsbeispiel. Denn die Stand- oder Fußfläche 17 ist bei diesem Ausführungsbeispiel in Längs- und Querrichtung identisch dimensioniert, mit identisch ausgebildeten Lochausnehmungen 27, sodass die identischen Kappen 29 mit ihren Formvorsprüngen 33 auf der Fußunterseite in die Standbeine 9 eingesteckt werden können.

Ebenso können auch weitere unterschiedlich dimensionierte Pflanzentopf-Träger gebildet werden, deren Füße bevorzugt aber stets vergleichbar gestaltet und dimensioniert sind.

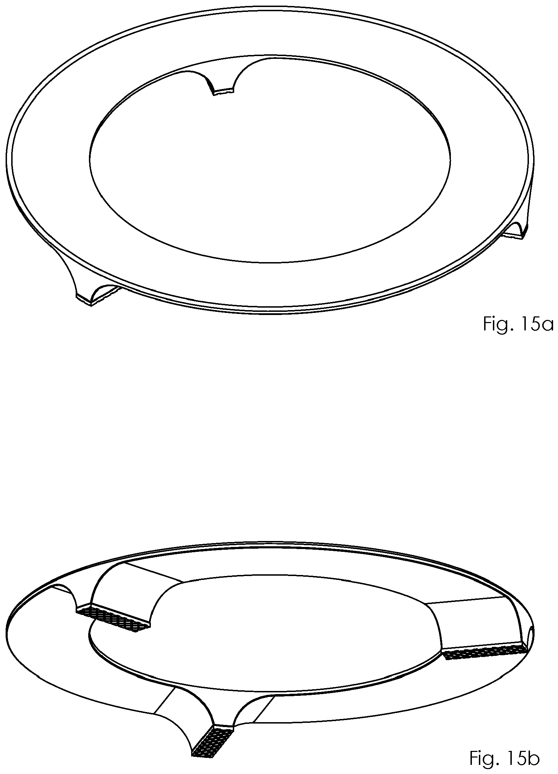

In Figur 15a ist in zu Figur 6a schräger Draufsicht und in Figur 15b in schräger Unteransicht (vergleichbar der Darstellung gemäß Figur 7b) für das sogenannte zweite Ausführungsbeispiel der erfindungsgemäße Pflanzentopf-Untersetzer gezeigt, dem die entsprechenden erwähnten Fußkappen 19 auf die Unterseite der Standbeine 9 aufgesteckt sind. Da die Ausbildung der Kappen und der Befestigungsmechanismus vergleichbar dem ersten Ausführungsbeispiel sind, wird insoweit auf die obigen Ausführungen verwiesen.

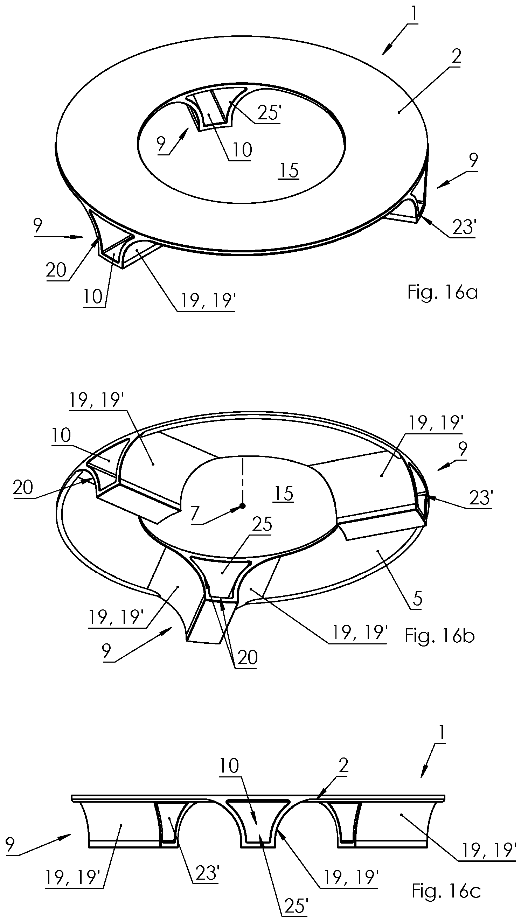

Anhand der Figuren 16a, 16b und 16c ist eine Abwandlung eines lochscheibenförmigen Pflanzentopf-Trägers mit kreisförmiger Außenkontur gezeigt, vergleichbar mit dem Ausführungsbeispiel nach Figur 1 und 2. Unterschiedlich ist jedoch, dass die Füße oder Standbeine 9 bei an sich gleicher Außenkonturgestaltung hohl sind, und zwar unter Ausbildung eines Standbein-Hohlraums 10. Dieser Standbein-Hohlraum 10 erstreckt sich mehr oder weniger von der Zentralachse 7 ausgehend in radialer Richtung (also in Längsrichtung der Füße) oder zumindest mit radialer Komponente, so dass die jeweiligen Standbeine 9 an der sogenannten Fußaußenfläche 23 bzw. der Fußinnenfläche 25 bei den Ausführungsbeispielen nach Figur 1 und 2 (bei welchem die Standbeine innen und außen geschlossen sind) an dieser Stelle eine Fußaußenöffnung 23' und eine Fußinnenöffnung 25' aufweisen. Dadurch kann Material eingespart werden. Trotzdem wird eine hohe Standfestigkeit erzielt, da die Füße an der Unterseite 5 der eigentlichen Stellfläche 4 der sogenannten Trägerplatte 2 deutlich breiter sind als die eigentliche unten und zur Trägerplatte 2 entfernt liegende Stand- oder Fußfläche 17. Mit anderen Worten sind von der Stand- oder Fußfläche 17 ausgehend die gegenüberliegenden Seitenwände 19' divergierend in Richtung Trägerplatte 2 verlaufend ausgestaltet, wodurch aufgrund der nicht parallelen Gestaltung dieser Wände eine erhöhte Standsicherheit realisiert wird. Diese kann auch hohe Scher- oder Drehkräfte mitaufnehmen, ohne dass es zu einer Verformung kommt. Dabei sind die in Umfangsrichtung um die Zentralachse 7 in entgegengesetzter Richtung ausgerichteten Seitenwände 19' bevorzugt ebenfalls wieder konkav gestaltet.

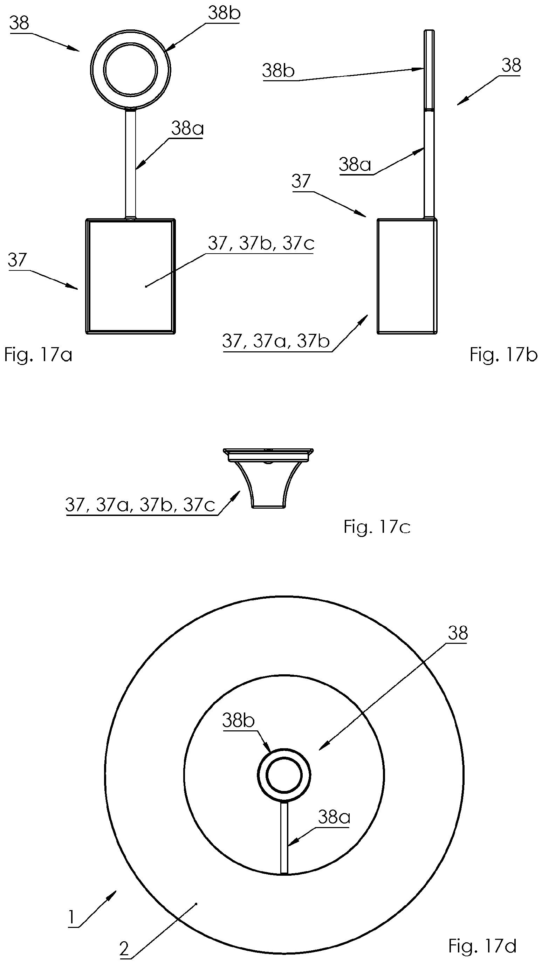

Durch den so im eigentlichen Standbein oder Standfuß 9 geschaffenen Standbein-Hohlraum 10 kann dann beispielsweise eine zusätzliche bevorzugt elektrische und/oder elektronische Einrichtungen 37 untergebracht werden, und zwar mit einer Außenkontur, die bevorzugt der Innenkontur des Standbein-Hohlbereichs 10 entspricht. Dies ist anhand der Figuren 17a bis 17d gezeigt. Dadurch kann die erwähnte Einrichtung 37 bevorzugt formschlüssig und/oder auch kraftschlüssig untergebracht werden. Sie soll dabei bevorzugt eine Länge aufweisen, die nicht länger ist als die Länge L des eigentlichen Standbeins 9, damit die entsprechende Einrichtung 37 weder nach innen noch nach außen hin übersteht. Bevorzugt soll sie innen bzw. außen mehr oder weniger bündig mit dem umlaufenden Rand 20 des jeweiligen Standbeines 9 abschließen, durch welchen der eigentliche seitliche Öffnungs- und/oder Einschubbereich 10' der in Rede stehenden Standbeine 9 begrenzt ist.

Bei dieser elektrisch und/oder elektronischen Einrichtung 37 kann es sich beispielsweise um einen Bewegungsmelder 37a und/oder auch um eine Beleuchtungseinrichtung 37b handeln, gegebenenfalls mit integrierten oder an geeigneter Stelle vorgesehenen Solarzellen, worüber eine integrierte Beleuchtungseinrichtung mit Strom versorgt werden kann. Diese kann nach außen oder innen abstrahlen. Bevorzugt ist jedoch eine mittige Beleuchtungseinrichtung 38 vorgesehen, wie dies in Figur 17 in Draufsicht angedeutet ist.

Dabei ist die entsprechende Einrichtung 37 in Form einer Beleuchtungseinrichtung 38 in separater Draufsicht in Figur 17a, in Seitenansicht in Figur 17b und in rückwärtiger Ansicht in Figur 17c in eingebautem Zustand gezeigt.

Der eigentliche Körper der Einrichtung 37 ist also in den Standbein-Hohlraum 10 eingeschoben und bevorzugt formschlüssig untergebracht und steht wie erwähnt an den beiden gegenüberliegenden Stirnseiten nicht vor. Über eine Verbindungsstange 38a ist dann eine LED-Beleuchtungseinheit 38b gehalten, beispielsweise in Form eines Leuchtringes, der bevorzugt nach unten in Richtung Boden abstrahlt. Dadurch ist die relativ freie Gestaltung des Pflanzentopf-Trägers zwischen den Standbeinen ist ersichtlich, vor allem wenn die Beleuchtung zugeschaltet ist.

Die Zuschaltung kann beispielsweise über einen in der Beleuchtungseinheit 37b integrierten Dämmungssensor 37c realisiert werden, der bei Unterschreiten eines Helligkeitswertes die Lampe automatisch an- und bei Überschreiten wieder abschaltet.

Schließlich kann in der Beleuchtungseinheit 37 auch ein Bewegungsmelder 37a integriert sein, der nicht nur das Licht zuschaltet und/oder alternativ ein Signal zu einer Empfangseinrichtung innerhalb des Hauses abgibt, wodurch signalisiert wird, dass sich Personen oder Tiere in unmittelbarer Nähe des Pflanzentopf-Trägers aufhalten bzw. als Sicherheitsüberwachung im Gebäudeteil wo sich der Pflanztopf-Träger befindet, somit kann mit mehreren Pflanztopf-Träger ein gesamtes Gebäude abgesichert bzw. überwacht werden, ebenso können so speziell auch Alte oder kranke Personen überwacht werden.

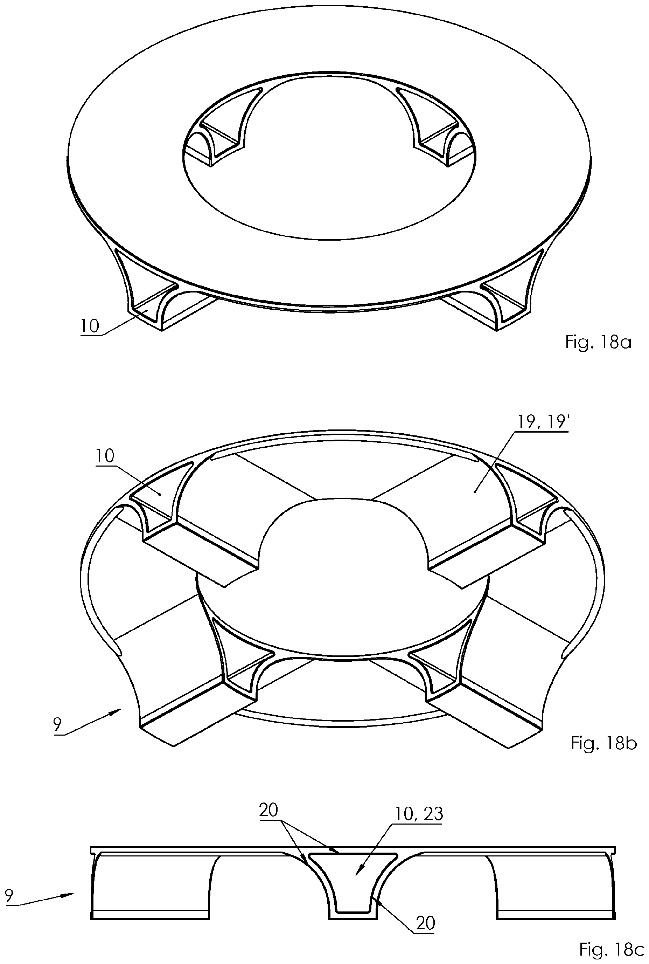

Anhand der Figuren 18a, 18b und 18c ist nur ein abgewandeltes Ausführungsbeispiel gezeigt, bei dem vier in Umfangsrichtung versetzt vorgesehene Standbeine 9 an der Unterseite des Pflanzentopf-Trägers ausgebildet sind.

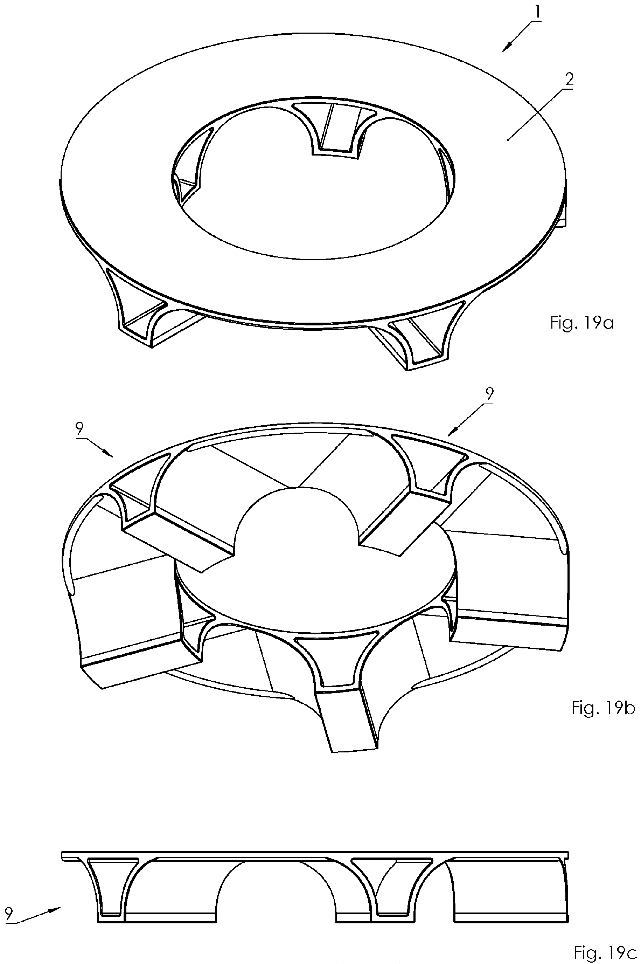

Anhand der Darstellung gemäß der Figuren 19a, 19b und 19c ist eine entsprechende Darstellung wiedergegeben, bei der nunmehr fünf Standbeine verwendet wurden. Dies zeigt nur, dass keine Beschränkung auf eine bestimmte Standbein-Anzahl gegeben ist.

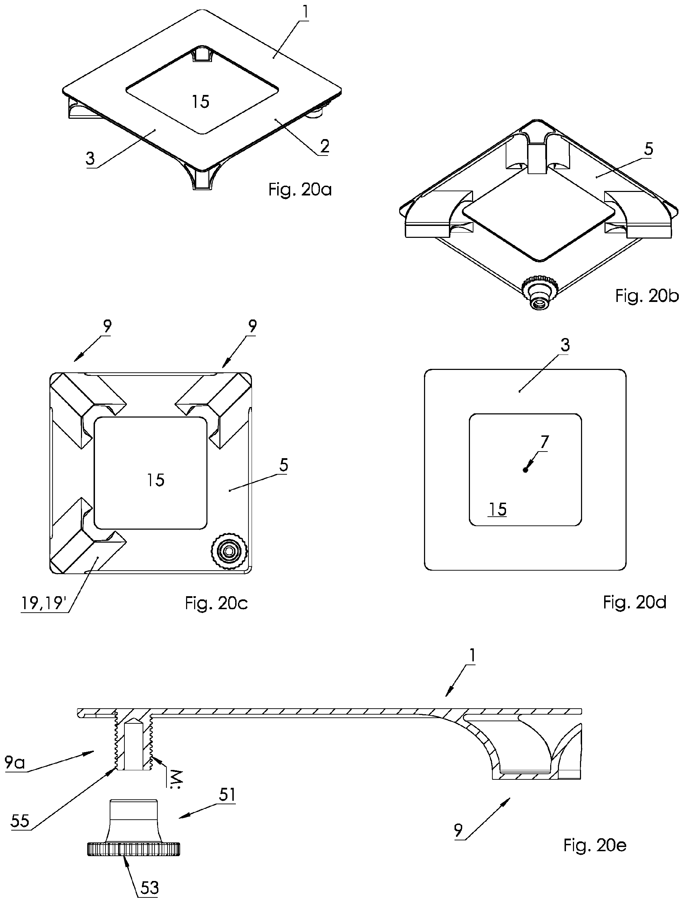

Anhand der Figuren 20a bis 20e sind verschiedene Ansichten eines rechteckförmigen, bevorzugt eines quadratischen Pflanzentopf-Trägers wiedergegeben, der eine mehr oder weniger quadratische Außenumfangskontur anstelle einer kreisförmigen Kontur aufweist. Entsprechend ist bevorzugt auch die innere Öffnung 15 der äußeren Kontur entsprechend ausgebildet, also bei einem n-polygonalen n-polygonal-förmig, d.h. im gezeigten Ausführungsbeispiel quadratisch.

Die Standbeine sind auch hier im Umfangsrichtung um die Zentralachse herum um 90° versetzt liegend angeordnet, wobei drei Beine eine entsprechende Ausbildung wie in den vorausgegangenen Ausführungsbeispielen aufweisen und in den Ecken verlaufend mit von der Zentralachse ausgehenden Radialkomponenten ausgerichtet sind. Auch hier sind, wenn die Standbeine hohl sind, die Öffnungsbereiche 23', 25' bevorzugt nach außen weisend bzw. in Richtung Zentralachse nach innen weisend ausgebildet.

Da bei dieser Variante mehr als drei Standbeine wie erläutert vorgesehen und ausgebildet sind, ist ein vierter Fuß davon abweichend gestaltet, nämlich mit einem höhenjustierbaren Fuß 9a. Dieser kann eine Stellschraube oder Schraubenfuß 51 beispielsweise mit einem Innengewinde und einem Standteller 53 aufweisen, der auf einem mit einem Außengewinde versehenen Zapfen 55 unterschiedlich weit aufdrehbar ist, der an der Unterseite der Trägerplatte 2 des Pflanzentopf-Trägers vorgesehen und mit diesem verbunden ist, vorzugsweise einstückig mit diesem ausgebildet ist. Durch ein unterschiedlich weites Ein- und Ausdrehen kann eine kippfreie Aufstellung des Pflanzentopf-Trägers realisiert werden. Der Gewindeansatz kann aber unterschiedlich gestaltet sein, so dass der in der Höhe verstellbare Teil des höhenverstellbaren Fußes mit einem Außengewinde versehen ist, das in einen mit einem Innengewinde versehenen Hohlzylinder eindrehbar ist, der wiederum fest mit der Trägerplatte 2 des Pflanzentopf-Trägers verbunden ist, vorzugsweise einteilig oder einstückig mit diesem ausgebildet ist.

Grundsätzlich können die erläuterten Pflanzentopf-Untersetzer unabhängig von ihrer konkreten Gestaltung aus unterschiedlichsten Materialien hergestellt sein, z.B. aus Ton oder auch Kunststoff. Bevorzugt wird jedoch nicht ein "normaler" Kunststoff wie beispielsweise ABS oder Polyethylen und dergleichen verwendet, sondern ein ökologisches Material, das möglichst zu mehr als 90% oder 95% oder insbesondere zu 97% aus nachwachsenden Rohstoffen besteht.

Die erfindungsgemäßen Pflanzentopf-Untersetzer können dabei in allen beliebigen Größen und Formen hergestellt werden. Anstelle der anhand der Figuren 15a und 15b erläuterten Abschlusskappen 29 können auch selbstklebende Füße und insbesondere selbstklebende Filzfüßen verwendet werden, die auf den unteren Flächen der Standbeine einfach aufgeklebt werden, wobei diese Filzfüße natürlich in der Regel nur für den Indoor-Bereich verwendet werden.

## Patentansprüche

1. Pflanzentopf-Untersetzer mit folgenden Merkmalen:
- einem Pflanzentopf-Träger (1), der eine Oberseite (3) und eine Unterseite (5) aufweist,
- mit einem auf der Oberseite (3) vorgesehenen Pflanzentopf-Stellbereich (3a),
- mit zumindest drei Standbeinen (9), die auf der Unterseite (5) des Pflanzentopf-Trägers (1) vorgesehen oder ausgebildet sind, und dabei um eine den Pflanzentopf-Träger (1) durchsetzende Zentralachse (7) in Umfangsrichtung versetzt liegend vorgesehen sind,
- mit einem Öffnungsbereich (15), der den PflanzentopfTräger (1) von dessen Ober- zu dessen Unterseite (3,5) durchsetzt,
- alle oder zumindest drei Standbeine (9) weisen eine in Umfangsrichtung des Pflanzentopf-Trägers (1) um die Zentralachse (7) herum verlaufende Dicke auf,
**dadurch gekennzeichnet, dass**
- die um die Zentralachse (7) herum verlaufende Dicke von dem Standflächenbereich (17) in Richtung Oberseite (3) des Pflanzentopf-Trägers (1) zunimmt,
- die in Umfangsrichtung in entgegengesetzter Richtung an den Standbeinen (9) ausgebildeten Begrenzungsflächen (19) der Standbeine (9) sind konkav gestaltet, und
- die Standbeine (9) sind so ausgebildet,
a) dass deren konkave Begrenzungsflächen (19) von der unteren Standfläche der Standbeine (9) ausgehend
- in die Unterseite (5) des plattenförmigen Pflanzentopf-Trägers oder
- tangential unter Vermeidung einer Übergangskante in die Unterseite (5) des plattenförmigen Pflanzentopf-Trägers übergehen, und
b) dass die radiale Längserstreckung (L) der Standbeine (9) ein Maß aufweist, welches der radialen Breite des durch den zentralen Öffnungsbereich (15) in der Oberseite (3) des Pflanzentopf-Trägers (1) gebildeten ringförmigen Tragabschnittes (22) entspricht oder um weniger als +- 20% oder um weniger als +- 10% davon abweicht.

2. Pflanzentopf-Untersetzer nach Anspruch 1, **dadurch gekennzeichnet, dass** der Pflanzentopf-Träger (1) und/oder seine Trägerplatte (2) in Draufsicht scheibenförmig und insbesondere lochscheibenförmig mit kreisförmiger Außenkontur oder n-polygonal mit einem bevorzugt n-polygonalen Öffnungsbereich (15) ausgebildet ist, insbesondere mit gleichlangen Kanten.

3. Pflanzentopf-Untersetzer nach Anspruch 1 oder 2, **dadurch gekennzeichnet, dass** die Oberfläche des Pflanzentopf-Trägers auf dessen Oberseite (3) und/oder auf dessen Unterseite (5) und/oder an dessen nach außen weisenden Fußaußenfläche (23) und/oder an dessen nach innen weisenden Fußinnenflächen (25) der Standbeine (9)
a) glatt ist, und/oder
b) hochglanzpoliert, strichpoliert oder feingefräst ist, und/oder
c) gemäß der genormten Rauigkeitsangaben aus dem Maschinenbau einen Rauigkeitswert Ra (DIN EN ISO 4287:2010-07) kleiner als 2,0 aufweist, und/oder
d) gemäß den Erodierstrukturen nach VDI 3400 (1975-06) Oberflächen mit einem Wert vorzugsweise bis zu 24, 27, 30, 33, und vorzugsweise bis zu 36 aufweisen.

4. Pflanzentopf-Untersetzer nach Anspruch 1 bis 3, **dadurch gekennzeichnet, dass** die Oberfläche des Pflanzentopf-Trägers (1) an dessen Oberseite (3) und/oder an dessen Unterseite (5) vorsprung-, rippensteg- und/oder verstrebungsfrei und/oder hinterschneidungsfrei ausgebildet ist.

5. Pflanzentopf-Untersetzer nach einem der Ansprüche 1 bis 4, **dadurch gekennzeichnet, dass** die Standbeine (9)
(a) einen Standflächenbereich (17) aufweisen, der in Umfangsrichtung des Pflanzentopf-Trägers (1) um die Zentralachse (7) herum eine Quererstreckung aufweisen, die kleiner als 15%, vorzugsweise kleiner als 12,5%; 10%; 7,5% und vorzugsweise kleiner als 5% der gesamten Umfangslänge im Bereich des Außenumfangs (11) des PflanzentopfTrägers (1) ist, und/oder
(b) mit ihrer Längserstreckung (L) in radial Richtung bezogen auf die Zentralachse (7) ausgerichtet sind, wobei die Längserstreckung (L) zumindest das 1,5-fache, vorzugsweise zumindest das 2-fache, 3-fache, oder zumindest 4-fache der in Umfangsrichtung verlaufenden Breitenerstreckung der Standbeine (9) beträgt.

6. Pflanzentopf-Untersetzer nach einem der Ansprüche 1 bis 5, **dadurch gekennzeichnet,**
(a) **dass** die konkaven Begrenzungsflächen (19) der Standbeine (9) mit näherungsweise paralleler Ausrichtung zur Zentralachse (7) verlaufend an oder in der Nähe der Stand- oder Fußfläche (17) beginnen und vorzugsweise zumindest näherungsweise tangential an der Unterseite (5) des standbeinfreien Tragabschnittes (9a) des Pflanzentopf-Trägers (1) auslaufen, und/oder
(b) **dass** die von der Zentralachse (7) radial nach außen weisenden Fußaußenflächen (23) der Standbeine (9) bevorzugt senkrecht zum Pflanzentopf-Standflächenbereich (3a) ausgerichtet sind oder um weniger als +- 20%, insbesondere weniger als +- 10% davon abweichend verlaufen, und/oder
(c) **dass** die radial zur Zentralachse (7) nach innen weisenden Fußinnenflächen (25) der Standbeine (9) bevorzugt senkrecht zum Pflanzentopf-Standflächenbereich (3a) ausgerichtet sind, oder um weniger als +- 20%, insbesondere weniger als +-10% davon abweichend verlaufend ausgerichtet sind

7. Pflanzentopf-Untersetzer nach einem der Ansprüche 1 bis 6, **dadurch gekennzeichnet, dass** der Pflanzentopf-Standflächenbereich (3a) und damit die Oberseite (3) des Pflanzentopf-Trägers (1) am Außenumfang (11) einen geringfügig über den Pflanzentopf-Standflächenbereich nach oben und/oder nach unten überstehenden Rand (13) aufweist.

8. Pflanzentopf-Untersetzer nach einem der Ansprüche 1 bis 6, **dadurch gekennzeichnet,**
(a) **dass** die Form des Öffnungsbereichs (15) der Form des Pflanzentopf-Standbereiches (3) in Draufsicht entspricht und dabei konzentrisch zur Zentralachse (7) angeordnet ist, und/oder
(b) **dass** die Flächengröße des Öffnungsbereiches (15) bevorzugt größer als 15%, insbesondere größer als 20%, 25%, 30%, 35%, 40%, 45%, 50%, 55% oder bevorzugt größer als 60% und/oder vorzugsweise kleiner als 70% ist, das heißt insbesondere kleiner als 65%, 60%, 55%, 50%, 45%, 40%, 35%, 30%, 25% oder 20% ist und zwar bezogen auf den durch den Außenumfang (11) des Pflanzentopf-Stellbereiches (3a) umgrenzten Fläche.

9. Pflanzentopf-Untersetzer nach einem der Ansprüche 1 bis 8, **dadurch gekennzeichnet, dass** die Stand- oder Fußfläche (17) der Standbeine (9) rechteckförmig gestaltet ist.

10. Pflanzentopf-Untersetzer nach einem der Ansprüche 1 bis 9, **dadurch gekennzeichnet, dass** die Standbeine (9),
a) als Vollfüße oder
b) als Hohlfüße mit einem Standbein-Hohlraum (10) ausgebildet sind.

11. Pflanzentopf-Untersetzer nach Anspruch 10, **dadurch gekennzeichnet, dass** die mit einem Standbein-Hohlraum (10) ausgestalteten Standbeine (9) so gestaltet sind, dass die nach innen der Zentralachse (7) zugewandte Stirnseite eine Fußinnenöffnung (25') und/oder die von der Zentralachse (7) wegweisende äußere Stirnseite des Standbeines (9) eine Fußaußenöffnung (23') aufweist bzw. aufweisen.

12. Pflanzentopf-Untersetzer nach einem der Ansprüche 10 oder 11, **dadurch gekennzeichnet, dass** in den Standbein-Hohlraum (10) eine vorzugsweise elektrisch und/oder elektronische Einrichtung (37) untergebracht ist, vorzugsweise formschlüssig und/oder kraftschlüssig.

13. Pflanzentopf-Untersetzer nach Anspruch 12, **dadurch gekennzeichnet, dass** die in dem Standbein-Hohlraum (10) untergebrachte Einrichtung (37) einen Bewegungsmelder (37a) und/oder eine Beleuchtungseinrichtung (37b) und/oder einen Dämmerungssensor (37c) und/oder Feuchtigkeitssensor umfasst, die vorzugsweise über den Standbein-Hohlraum (10) stirnseitig nicht überstehende Begrenzungsflächen (23', 25') aufweist.

14. Pflanzentopf-Untersetzer nach einem der Ansprüche 10 bis 13, **dadurch gekennzeichnet, dass** die Beleuchtungseinrichtung (37c) einen in Richtung der Zentralachse (7) vorstehenden Haltekörper oder Haltestab (38a) umfasst, an dem eine lichtabstrahlende Leuchteinheit (38b) gehalten ist, die mit einer in der Beleuchtungseinrichtung im Standbein-Hohlraum (10) untergebrachten Batterie und/oder Akkumulator mit Strom versorgbar ist, und die vorzugsweise mittig zur Zentralachse (7) angeordnet ist und vorzugsweise nach unten abstrahlt.

15. Pflanzentopf-Untersetzer nach einem der Ansprüche 1 bis 14, **dadurch gekennzeichnet, dass** dieser aus Kunststoff und insbesondere aus einem ökologischen und vorzugsweise nachwachsenden Rohstoff besteht oder diesen umfasst.

## Claims

1. Plant pot saucer having the following features:
- a plant pot carrier (1) that has a top side (3) and an underside (5),
- having a plant pot placement region (3a) provided on the top side (3),
- having at least three standing legs (9) that are provided or formed on the underside (5) of the plant pot carrier (1), and are here provided lying offset in the circumferential direction around a central axis (7) passing through the plant pot carrier (1),
- having an opening region (15) that passes through the plant pot carrier (1) from its top side to its underside (3, 5),
- all, or at least three of the standing legs (9) have a thickness running around the central axis (7) in the circumferential direction of the plant pot carrier (1),
**characterised in that**
- the thickness running around the central axis (7) increases from the standing surface region (17) in the direction of the top side (3) of the plant pot carrier (1),
- the limiting surfaces (19) of the standing legs (9) formed on the standing legs (9) in the opposite direction in the circumferential direction are concave in shape, and
- the standing legs (9) are formed such that
a) their concave limiting surfaces (19) starting from the lower standing surface of the standing legs (9) merge
- into the underside (5) of the plate-shaped plant pot carrier or
- tangentially into the underside (5) of the plate-shaped plant pot carrier while avoiding a transition edge,
and
b) the radial longitudinal direction (L) of the standing legs (9) has a measure that corresponds to the radial width of the ring-shaped carrying portion (22) formed through the central opening region (15) in the top side (3) of the plant pot carrier (1), or deviates from said radial width by less than ± 20% or by less than ± 10%.

2. Plant pot saucer according to claim 1, **characterised in that** the plant pot carrier (1) and/or its carrier plate (2) when viewed from above is formed in a disc shape, and in particular a perforated disc shape, having a circular outer contour, or as an n-polygon having a preferably n-polygonal opening region (15), in particular having edges of equal length.

3. Plant pot saucer according to claim 1 or 2, **characterised in that** on its top side (3) and/or on its underside (5) and/or on its outward-facing outer foot surfaces (23) and/or on its inward-facing inner foot surfaces (25) of the standing legs (9), the surface of the plant pot carrier
a) is flat, and/or
b) is high-gloss polished, line-polished or finely milled, and/or
c) has a roughness value Ra (DIN EN ISO 4287:2010-07) smaller than 2.0 according to the standardised roughness principles from machine construction, and/or
d) has surfaces having a value of preferably up to 24, 27, 30, 33 and preferably up to 36 according to the eroded structures according to VDI 3400 (1975-06).

4. Plant pot saucer according to claims 1 to 3, **characterised in that** the surface of the plant pot carrier (1) is formed on its top side (3) and/or on its underside (5) without ledge, ribs, bar and/or strutting and/or without indentations.

5. Plant pot saucer according to one of claims 1 to 4, **characterised in that** the standing legs (9)
a) have a standing surface region (17) that has an oblique extension in the circumferential direction of the plant pot carrier (1) around the central axis (7) that is smaller than 15%, preferably smaller than 12.5%; 10%; 7.5% and preferably smaller than 5% of the entire circumferential length in the region of the outer circumference (11) of the plant pot carrier (1), and/or
b) are aligned having their longitudinal extension (L) in the radial direction in relation to the central axis (7), wherein the longitudinal extension (L) is at least 1.5 times, preferably at least 2 times, 3 times, or at least 4 times the width extension of the standing legs (9) running in the circumferential direction.

6. Plant pot saucer according to one of claims 1 to 5, **characterised in that**
a) the concave limiting surfaces (19) of the standing legs (9) start on or near the standing or foot surface (17) having an alignment running approximately in parallel to the central axis (7), and preferably end at least approximately tangentially on the underside (5) of the carrying portion (9a) of the plant pot carrier (1) that is free of standing legs, and/or
b) the outer foot surfaces (23) of the standing legs (9) pointing radially outwards from the central axis (7) are preferably aligned perpendicularly to the plant pot standing surface region (3a), or run deviating from the latter alignment by less than ± 20%, in particular less than ± 10%, and/or
c) the inner foot surfaces (25) of the standing legs (9) pointing radially inwards to the central axis (7) are preferably aligned perpendicularly to the plant pot standing surface region (3a), or are aligned running in a manner that deviates from the latter alignment by less than ±20%, in particular less than ± 10%.

7. Plant pot saucer according to one of claims 1 to 6, **characterised in that** the plant pot standing surface region (3a), and thus the top side (3) of the plant pot carrier (1) has an edge (13) that protrudes slightly upwards or downwards over the plant pot standing surface region on its outer circumference (11).

8. Plant pot saucer according to one of claims 1 to 6, **characterised in that**
a) the shape of the opening region (15) corresponds to the shape of the plant pot standing region (3) when viewed from above, and is here arranged concentrically to the central axis (7), and/or
b) the surface size of the opening region (15) is preferably larger than 15%, in particular larger than 20%, 25%, 30%, 35%, 40%, 45%, 50%, 55%, or preferably larger than 60%, and/or is preferably smaller than 70%, i.e., in particular smaller than 65%, 60%, 55%, 50%, 45%, 40%, 35%, 30%, 25% or 20%, in particular in relation to the surface enclosed by the outer circumference (11) of the plant pot placement region (3a).

9. Plant pot saucer according to one of claims 1 to 8, **characterised in that** the standing or foot surface (17) of the standing legs (9) is rectangular in shape.

10. Plant pot saucer according to one of claims 1 to 9, **characterised in that** the standing legs (9) are formed
a) as full feet or
b) as hollow feet having a standing leg cavity (10).

11. Plant pot saucer according to claim 10, **characterised in that** the standing legs (9) formed with a standing leg cavity (10) are shaped such that the end face facing inwards towards the central axis has an inner foot opening (25') and/or the outer end face of the standing leg (9) pointing away from the central axis (7) has an outer foot opening (23').

12. Plant pot saucer according to one of claims 10 or 11, **characterised in that** a preferably electric and/or electronic device (37) is housed in the standing leg cavity (10), preferably in a form-fit and/or force-fit manner.

13. Plant pot saucer according to claim 12, **characterised in that** the device (37) housed in the standing leg cavity (10) comprises a motion detector (37a) and/or a lighting device (37b) and/or a twilight sensor (37c) and/or a moisture sensor that preferably has limiting surfaces (23', 25') that do not protrude over the standing leg cavity (10) on the end face.

14. Plant pot saucer according to one of claims 10 to 13, **characterised in that** the lighting device (37c) comprises a holding body or holding rod (38a) protruding in the direction of the central axis (7), on which a light-emitting lighting unit (38b) is held, that can be provided with current via a battery and/or accumulator housed in the lighting device in the standing leg cavity (10), and that is preferably arranged in the centre of the central axis (7), and preferably radiates downwards.

15. Plant pot saucer according to one of claims 1 to 14, **characterised in that** said plant pot saucer consists of plastic, and in particular of an ecological, and preferably renewable material, or comprises the same.

## Revendications

1. Dessous de pot de fleur présentant les particularités suivantes :
- il comporte un support de pot de fleur (1) présentant une face supérieure (3) et une face inférieure (5),
- il comporte une zone d'assise de pot de fleur (3a) prévue sur la face supérieure (3),
- il comporte au moins trois pieds (9) prévus ou conçus sur la face inférieure (5) du support de pot de fleur (1) et prévus espacés dans le sens de la circonférence autour d'un axe central (7) traversant le support de pot de fleur (1),
- il comporte une zone ouverte (15) traversant le support de pot de fleur (1) de sa face supérieure vers sa face inférieure (3, 5),
- au moins trois pieds (9), voire tous, présentent une épaisseur orientée autour de l'axe central (7) dans le sens de la circonférence du support de pot de fleur (1),
**caractérisé en ce que**
- ladite épaisseur orientée autour de l'axe central (7) va croissant en partant de la zone de surface de repos (17) vers la face supérieure (3) du support de pot de fleur (1),
- les surfaces de délimitation (19) des pieds (9), conçues au niveau des pieds (9) dans des directions opposées dans le sens de la circonférence, sont de forme concave, et
- les pieds (9) sont conçus de telle façon que
a) leurs surfaces de délimitation (19) concaves, partant de la surface inférieure de repos des pieds (9),
- rejoignent la face inférieure (5) du support de pot de fleur en forme de plaque ou
- rejoignent la face inférieure (5) du support de pot de fleur en forme de plaque tangentiellement en évitant de former un bord de transition, et
b) l'étendue longitudinale radiale (L) des pieds (9) présente une dimension correspondant à la largeur radiale de la section de support (22) annulaire formée par la zone centrale ouverte (15) de la face supérieure (3) du support de pot de fleur (1) ou s'écarte de celle-ci de moins de ± 20 % ou de moins de ± 10 %.

2. Dessous de pot de fleur selon la revendication 1, **caractérisé en ce que** le support de pot de fleur (1) et/ou sa plaque de support (2) sont conçus en forme de disque, vus de dessus, notamment de manière annulaire avec un contour extérieur circulaire, ou n-polygonal avec une zone ouverte (15) de préférence n-polygonale, notamment à côtés de taille égale.

3. Dessous de pot de fleur selon la revendication 1 ou 2, **caractérisé en ce que** la surface du support de pot de fleur
a) est lisse, et/ou
b) est polie miroir, polie brossée ou fraisée haute précision, et/ou
c) présente une valeur de rugosité Ra (DIN EN ISO 4287:2010-07) inférieure à 2,0 selon les données de rugosité normées issues de la construction mécanique, et/ou
d) présente des surfaces dont la valeur ne dépasse pas de préférence 24, 27, 30 ou 33, et de préférence 36, selon les structures d'érosion conformes à la norme VDI 3400 (1975-06),
sur sa face supérieure (3) et/ou sur sa face inférieure (5) et/ou sur sa surface (23) tournée vers l'extérieur au niveau des pieds (9) et/ou sur sa surface (25) tournée vers l'intérieur au niveau des pieds.

4. Dessous de pot de fleur selon la revendication 1 à 3, **caractérisé en ce que** la surface du support de pot de fleur (1) est conçue, au niveau de sa face supérieure (3) et/ou de sa face inférieure (5), sans ressauts, nervures, gradins et/ou contrefichages et/ou sans contredépouilles.

5. Dessous de pot de fleur selon l'une des revendications 1 à 4, **caractérisé en ce que** les pieds (9)
(a) présentent une zone de surface de repos (17) dont l'étendue transversale, dans le sens de la circonférence du support de pot de fleur (1) autour de l'axe central (7), est inférieure à 15 %, de préférence inférieure à 12,5 %, 10 %, 7,5 % et de préférence 5 % de la longueur circonférentielle totale sur le pourtour extérieur (11) du support de pot de fleur (1), et/ou
(b) sont orientés, sur leur étendue longitudinale (L), dans le sens radial par rapport à l'axe central (7), ladite étendue longitudinale (L) faisant au moins 1,5 fois, de préférence au moins 2 fois, 3 fois ou au moins 4 fois l'étendue en largeur des pieds (9) dans le sens de la circonférence.

6. Dessous de pot de fleur selon l'une des revendications 1 à 5, **caractérisé en ce que**
(a) les surfaces de délimitation (19) concaves des pieds (9) partent de la surface de repos ou surface de pied (17) ou à proximité de celle-ci selon une orientation approximativement parallèle à l'axe central (7) et se terminent de préférence de manière au moins approximativement tangentielle au niveau de la face inférieure (5) de la section de support (9a) du support de pot de fleur (1) qui est exempte de pieds, et/ou
(b) la surface (23) des pieds (9) qui est tournée radialement vers l'extérieur à partir de l'axe central (7) est orientée de préférence perpendiculairement à la zone de surface de repos de pot de fleur (3a) ou s'en écarte de moins de ± 20 %, notamment de moins de ± 10 %, et/ou
(c) la surface (25) des pieds (9) qui est tournée vers l'intérieur par rapport à l'axe central (7) est orientée de préférence perpendiculairement à la zone de surface de repos de pot de fleur (3a) ou s'en écarte de moins de ± 20 %, notamment de moins de ± 10 %.

7. Dessous de pot de fleur selon l'une des revendications 1 à 6, **caractérisé en ce que** la zone de surface de repos de pot de fleur (3a) et donc la face supérieure (3) du support de pot de fleur (1) présente, sur le pourtour extérieur (11), un bord (13) faisant légèrement saillie vers le haut au-dessus de la zone de surface de repos de pot de fleur et/ou vers le bas.

8. Dessous de pot de fleur selon l'une des revendications 1 à 6, **caractérisé en ce que**
(a) la forme de la zone ouverte (15) correspond à la forme de la zone de repos de pot de fleur (3), vues de dessus, avec un agencement concentrique par rapport à l'axe central (7), et/ou
(b) la superficie de la zone ouverte (15) constitue de préférence plus de 15 %, notamment plus de 20 %, 25 %, 30 %, 35 %, 40 %, 45 %, 50 %, 55 % ou de préférence plus de 60 % et/ou de préférence moins de 70 %, c'est-à-dire notamment moins de 65 %, 60 %, 55 %, 50 %, 45 %, 40 %, 35 %, 30 %, 25 % ou 20 % de la surface délimitée par le pourtour extérieur (11) de la zone d'assise de pot de fleur (3a).

9. Dessous de pot de fleur selon l'une des revendications 1 à 8, **caractérisé en ce que** la surface de repos ou surface de pied (17) des pieds (9) est de forme rectangulaire.

10. Dessous de pot de fleur selon l'une des revendications 1 à 9, **caractérisé en ce que** les pieds (9) sont conçus pour être
a) pleins ou
b) creux, en présentant une cavité de pied (10).

11. Dessous de pot de fleur selon la revendication 10, **caractérisé en ce que** les pieds (9) présentant ladite cavité de pied (10) sont conçus de manière que la face tournée vers l'intérieur, proche de l'axe central (7), présente une ouverture dite intérieure (25') et/ou la face des pieds (9) tournée vers l'extérieur du pied et éloignée de l'axe central (7) présente une ouverture dite extérieure (23').

12. Dessous de pot de fleur selon l'une des revendications 10 et 11, **caractérisé en ce qu'un** dispositif (37) de préférence électrique et/ou électronique est agencé dans la cavité de pied (10), de préférence par complémentarité de forme et/ou par frottement.

13. Dessous de pot de fleur selon la revendication 12, **caractérisé en ce que** le dispositif (37) agencé dans la cavité de pied (10) comprend un détecteur de mouvement (37a) et/ou un dispositif d'éclairage (37b) et/ou un détecteur crépusculaire (37c) et/ou un détecteur d'humidité et présente de préférence des surfaces de délimitation (23', 25') ne dépassant pas des extrémités de la cavité de pied (10).

14. Dessous de pot de fleur selon l'une des revendications 10 à 13, **caractérisé en ce que** le dispositif d'éclairage (37c) comprend un corps ou une barrette formant support (38a) faisant saillie en direction de l'axe central (7) et supportant une unité luminescente (38b) susceptible d'être alimentée en courant par le biais d'une pile et/ou d'une batterie agencée dans le dispositif d'éclairage situé dans la cavité de pied (10), et disposée de préférence de manière centrée par rapport à l'axe central (7) et émettant de la lumière de préférence vers le bas.

15. Dessous de pot de fleur selon l'une des revendications 1 à 14, **caractérisé en ce qu'il** se compose de plastique ou comprend ce dernier et notamment une matière première écologique et de préférence renouvelable.
